# EUROPEAN PATENT APPLICATION

(11) **EP 4 804 139 A1**
(43) Date of publication of application: **09.09.2026**
(21) Application number: 25227842.9
(22) Date of filing: 31.12.2025
(51) Int. Cl.: G06V 10/778, G06V 10/82, G06V 20/40

(54) **SYSTEM AND METHOD FOR VIDEO SELECTION AND LABELLING**

(30) Priority: 04.03.2025 US 202563766540 P
(71) Applicant: Milestone Systems A/S, 2605 Brøndby (DK)
(72) Inventor: NAVARRO, Fulgencio, Brondby (DK); MAUSER, Edward Ronald, Brondby (DK); DRESEN, Danilo, Brondby (DK); CODOSERO PERERO, Juan Manuel, Brondby (DK)
(74) Representative: Pearl Cohen UK

(57) **Abstract**

A system and method for video selection and labelling including: receiving from the human operator a selection of first data items from the plurality of data items within the first video assembly; identifying second video assemblies comprising a sequence of frames and second data items, wherein the second data items are similar to the selection of the first data items; generating one or more candidate video assemblies comprising a sequence of frames, wherein the sequence of frames comprises a subset of the frames and data items from the second video assemblies which have been identified to be similar to the first data items, and a natural language label describing the sequence of frames; and presenting the human operator the one or more candidate video assemblies to receive feedback on the generated labels.

## Description

### CROSS REFERENCE TO RELATED APPLICATIONS

This application claims the benefit of US Provisional Patent Application No. 63/766,540, filed on March 4, 2025 which is hereby incorporated by reference in its entirety.

### TECHNICAL FIELD OF THE INVENTION

The present invention relates generally to the video selection and labelling.

### BACKGROUND OF THE INVENTION

Surveillance videos, for instance traffic camera footage, may be a rich source of data for the training, fine-tuning and in-context learning of large multi-modal models (LMMs), being a particular type of generative artificial intelligence (AI), encompassing large language models (LLMs) and vision/video language models (VLMs), where embeddings of sequences of tokens, which might represent natural language and/or images and video, can be used to achieve next token prediction or sequence-to-sequence predictions.

To train or fine-tune these models requires a significant amount of labelled data, for instance pairs of video sequences with natural language labels.

There are at least three difficulties in preparing labelled video training data: (a) a very large proportion of camera-captured video might be 'uneventful' - that is, lacking in features of interest with respect to the predictions sought; (b) there is a cost (human and/or computational) in labelling those features of interest (adding descriptive text, in natural language, to frames of video containing the predictions sought); (c) a costly amount of computation is required to train these models or their extensions may be prohibitive.

To facilitate this process, a degree of automation in both video sequence selection and labelling might be required. Video sequence selection can make use of: contextual metadata about the cameras used in capturing video and their situation within the world, and the timing and physical proximity of other sensor information, including cameras (e.g. as disclosed in application US 2022/0207971A1); configuration and operational data from cameras; lower-cost labelling of objects and behaviors of interest within the video (video metadata); computation of embeddings within video.

However, there is a need for a solution that can identify sequences of video frames within video assemblies (e.g. a sequence of frames within a video assembly) that are similar to other sequences of video frames, and generate a label representing the degree of similarity between the sequences of video frames.

### SUMMARY OF THE INVENTION

Embodiments of the invention may improve the technology of dataset selection and labelling of video assemblies by, for example, intelligently inferring relations between data items of video assemblies. Improvements and advantages of embodiments of the invention may include identifying data connections between different datasets of video assemblies, e.g. between data items of a first video assembly and data items of a second video assembly, e.g. third party data items. Embodiments may more efficiently identify data connections such as similarities between different datasets.

In one aspect, the present invention allows for automatically assessing relationships between data items in two or more video assemblies. Embodiments of the invention also improve the quality of training data for LMMs, for example for vision language models (VLMs), by providing a guided selection of video frames using input provided by a human operator, and labelling of the selection of video frames which provides a selection of specific training video segments from video assemblies, for example obtained from one or more cameras.

One embodiment includes a method of video selection and labelling including: receiving, at a computer memory, a first video assembly including a sequence of video frames and a plurality of data items; presenting a human operator, over an electronic display, the first video assembly; receiving from the human operator, over a user interface associated with the electronic display, a selection of one or more first data items from the plurality of data items within the first video assembly; identifying, by the computer processor, one or more second video assemblies including a sequence of frames and one or more second data items, wherein the one or more second data items are similar to the selection of the one or more first data items; and generating, e.g. by the computer processor, one or more candidate video assemblies each including: a sequence of frames, wherein the sequence of frames includes a subset of the frames and data items from the one or more second video assemblies which have been identified to be similar to the one or more first data items, and a natural language label describing the sequence of frames; presenting the human operator, over the electronic display, the one or more candidate video assemblies; and receiving feedback from the human operator, over the user interface, whether the label generated for the one or more candidate video assemblies is acceptable or is not acceptable.

In some embodiments, the one or more first data items are selected from one or more of: physical camera data items, operational data items, video metadata items, and embeddings.

In some embodiments, the embeddings are image or video embeddings.

In some embodiments, the video metadata items and embeddings are used in the assessment of the similarity between the one or more first data items and the one or more second data items.

In some embodiments, knowledge graphs include the metadata items and embeddings, and the knowledge graphs are compared in the assessment of the similarity between the one or more first data items and the one or more second data items, wherein the knowledge graphs contextualizing the first video assembly are compared with the knowledge graphs contextualizing the second video assembly. In some embodiments, knowledge graphs include context from outside the video assemblies.

In some embodiments, the video metadata items describe objects that appear in the frames and includes one or more of: object class, object size, object attributes, color features, and motion features.

Some embodiments include retrieving the one or more second video assemblies from a plurality of camera devices.

Some embodiments include retrieving the one or more second video assemblies from a video analytics module.

In some embodiments, metadata items are generated for each of the one or more second video assemblies indicating the camera from which the respective second video assembly is obtained.

In some embodiments, the natural language label describing the sequence of frames is generated by a vision-language model.

One embodiment may include a system for video selection and labelling, the system including: a computer memory arranged to receive a first video assembly including a sequence of video frames and a plurality of data items; an electronic display configured to (a) present to a human operator, the first video assembly; and (b) present to the human operator the one or more candidate video assemblies; a user interface associated with the electronic display, arranged to (a) receive from the human operator a selection of one or more first data items from the plurality of data items within the first video assembly; and (b) receive feedback from the human operator, over the user interface, whether the label generated for the one or more candidate video assemblies is acceptable; and a computer processor arranged to identify one or more second video assemblies including a sequence of frames and one or more second data items, wherein the one or more second data items are similar to the selection of the one or more first data items, wherein the computer processor is arranged to generate one or more candidate video assemblies each including: a sequence of frames, wherein the sequence of frames includes a subset of the frames and data items from the one or more second video assemblies which have been identified to be similar to the one or more first data items, and a natural language label describing the sequence of frames.

One embodiment may include a non-transitory computer readable medium for video selection and labelling including: a set of instructions that, when executed, causes at least one computer processor to: receive a first video assembly including a sequence of video frames and a plurality of data items; present a human operator, over an electronic display, the first video assembly; receive from the human operator, over a user interface associated with the electronic display a selection of one or more first data items from the plurality of data items within the first video assembly; identify one or more second video assemblies including a sequence of frames and one or more second data items, wherein the one or more second data items are similar to the selection of the one or more first data items; and generate one or more candidate video assemblies each including: a sequence of frames, wherein the sequence of frames includes a subset of frames and data items from the one or more second video assemblies which have been identified to be similar to the one or more first data items, and a natural language label describing the sequence of frames; present the human operator, over the electronic display, the one or more candidate video assemblies; and receive feedback from the human operator, over the user interface, whether or not the label generated for the one or more candidate video assemblies is acceptable.

These, additional, and/or other aspects and/or advantages of the present invention may be set forth in the detailed description which follows; possibly inferable from the detailed description; and/or learnable by practice of the present invention.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 shows a block diagram of an exemplary computing device which may be used with embodiments of the present invention.
FIG. 2 is a schematic drawing of a system for video selection and labelling, according to some embodiments of the invention.
FIG. 3 depicts a flowchart of methods of video selection and labelling, according to some embodiments of the present invention.
FIG. 4 is an illustration of a workflow which selects frames from video assemblies and generates labels for one or more of these frames which have been found to show a similarity for one or more first data items of a first video assembly and one or more second data items of a second video assembly, according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein is for the purpose of description and should not be regarded as limiting.

Unless specifically stated otherwise, as apparent from the following discussions, it is appreciated that throughout the specification discussions utilizing terms such as "processing", "computing", "calculating", "determining", "enhancing" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. Any of the disclosed modules or units may be at least partially implemented by a computer processor.

As used herein, "machine learning", "machine learning algorithms", "machine learning models", "ML", or similar, may refer to models built by algorithms in response to/based on input sample or training data. ML models may make predictions or decisions without being explicitly programmed to do so. ML models require training/learning based on the input data, which may take various forms.

ML models may, for example, include Large Language Models (LLM) such as Generative Pre-Trained Transformer (GPT), Bidirectional Encoder Representations from Transformers (BERT), Pathways Language Model (PaLM) and the like, (artificial) neural networks (NN), decision trees, regression analysis, Bayesian networks, Gaussian networks, genetic processes, etc. Additionally or alternatively, ensemble learning methods may be used which may use multiple/modified learning algorithms, for example, to enhance performance. Ensemble methods, may, for example, include "Random forest" methods or "XGBoost" methods.

ML models may, for example, include Video Language Models (VLM) such as Contrastive Language-Image Pretraining (CLIP), ALIGN, VideoCLIP, or MERLOT. CLIP can learn to connect images and text by training on a massive dataset of image-caption pairs, enabling it to understand visual concepts through language. It can perform zero-shot classification, meaning it recognizes objects or scenes without task-specific training. ALIGN may be a large-scale vision-language model that aligns visual and textual representations using noisy web data. It can achieve strong performance on cross-modal retrieval tasks, demonstrating robustness despite minimal data curation. VideoCLIP may extend the CLIP framework to video, learning joint video-text representations from large-scale video-caption datasets. It can enable tasks such as video retrieval, action recognition, and video question answering without fine-tuning. MERLOT can learn multimodal representations by aligning video frames with corresponding subtitles and contextual text. It can capture temporal and semantic relationships, allowing it to reason about events and actions across time in videos.

It will be understood that any subsequent reference to "machine learning", "machine learning algorithms", "machine learning models", "ML", or similar, may refer to any/all of the above ML examples, as well as any other ML models and methods as may be considered appropriate.

"Videos" or "video assemblies" may be sequences of still images (called frames) displayed rapidly - typically several frames per second - to create the illusion of continuous motion. They often include data items such as synchronized audio and may contain additional data such as subtitles, metadata and embeddings. In digital form, videos can be stored as video assemblies that use, for example, a container format (e.g., MP4, AVI, MKV) which holds the video, audio, and other data items. Embeddings may include image embeddings and video embeddings. They can be used to classify images or videos, or to perform a similarity search. An image embedding may be a numerical representation, e.g. a high-dimensional vector, that captures the essential features of an image, such as shapes, colors, textures and objects, in a compact form. An image embedding may be created using a pre-trained neural network (e.g. ResNet, CLIP) which processes the image through multiple layers and one of the final layers' outputs before classification is used as the embedding. A video embedding may be a numerical representation, e.g. a high-dimensional vector, that captures spatial and temporal features of a video assembly. Video embeddings may be created using a 3D convolutional network, transformers or multimodal encoders which process frames over time to generate embeddings that encode both what appears in the video and how it changes.

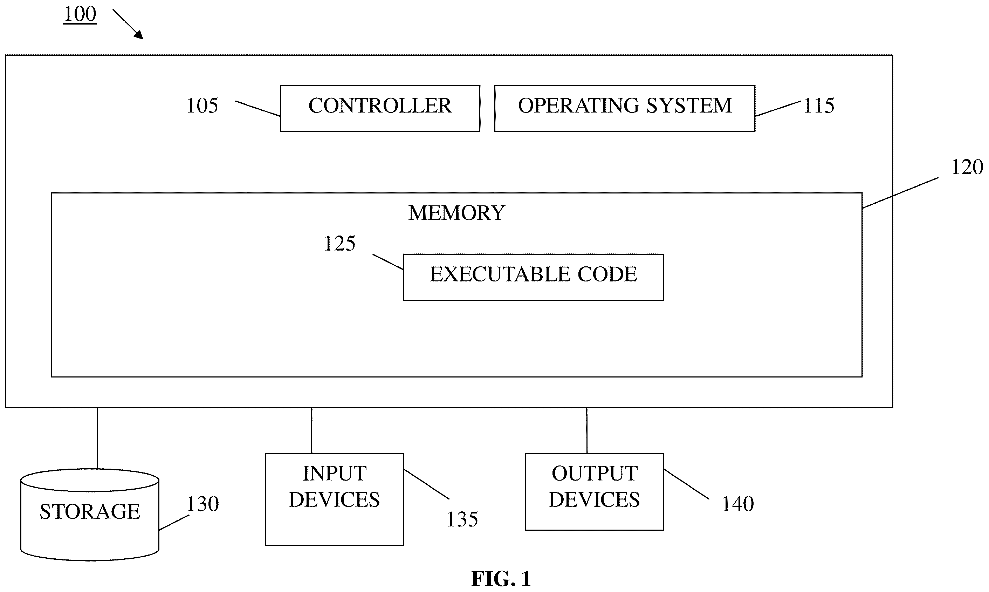

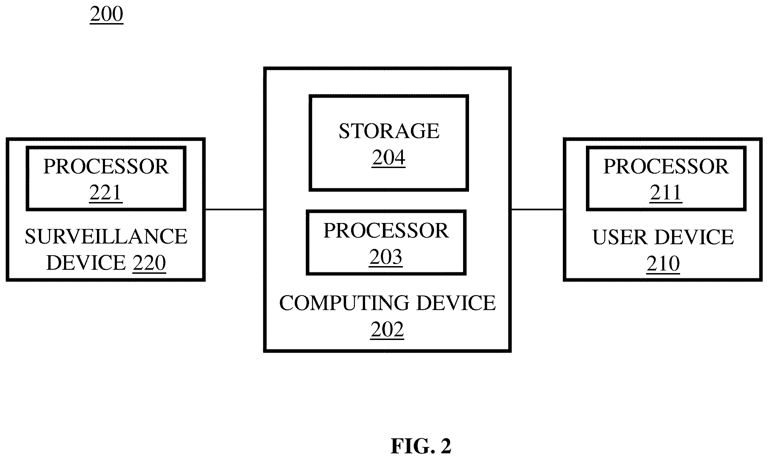

FIG. 1 shows a high-level block diagram of an exemplary computing device which may be used with embodiments of the present invention. Computing device 100 may include a controller or processor 105 that may be, for example, a central processing unit processor (CPU), a chip or any suitable computing or computational device, an operating system 115, a memory 120, a storage 130, input devices 135 and output devices 140 such as a computer display or monitor displaying for example a computer desktop system. Each of modules and equipment and other devices and modules discussed herein, e.g. video assembly database 404, data item database 406, and modules in FIGS. 2, 3, 4, may be or include, or may be executed by, a computing device such as included in FIG. 1 although various units among these modules may be combined into one computing device.

Operating system 115 may be or may include any code segment designed and/or configured to perform tasks involving coordination, scheduling, arbitration, supervising, controlling or otherwise managing operation of computing device 100, for example, scheduling execution of programs. Memory 120 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 120 may be or may include a plurality of, possibly different memory units. Memory 120 may store for example, instructions (e.g. code 125) to carry out a method as disclosed herein, and/or data.

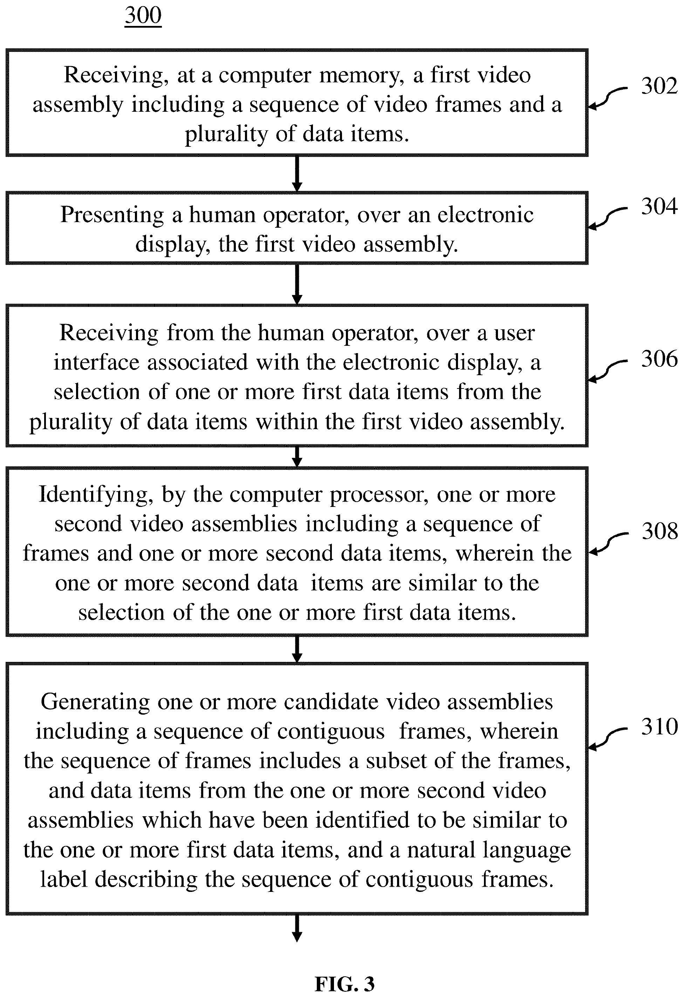

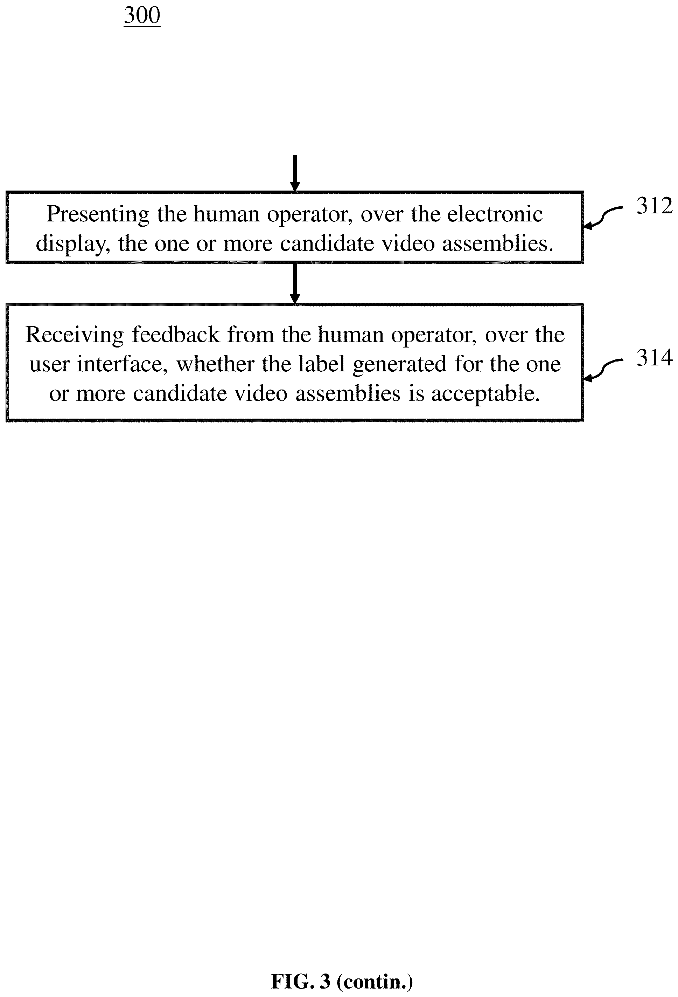

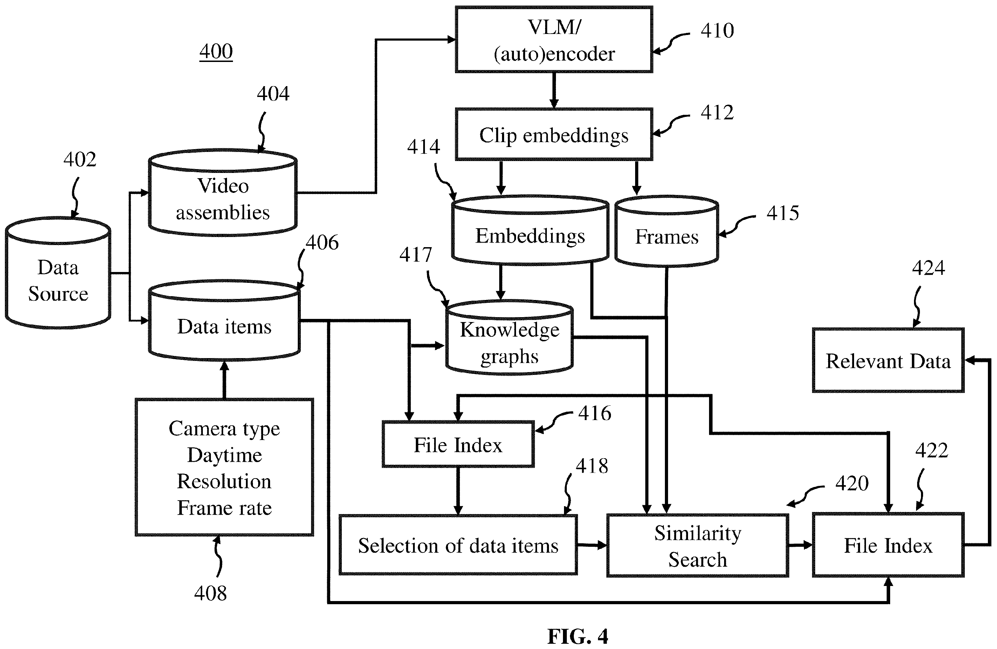

Executable code 125 may be any executable code, e.g., an application, a program, a process, task or script. Executable code 125 may be executed by controller 105 possibly under control of operating system 115. For example, executable code 125 may be one or more applications performing methods as disclosed herein, for example those of FIGs. 3, 4 or other figures, or other methods, according to embodiments of the present invention. In some embodiments, more than one computing device 100 or components of device 100 may be used for multiple functions described herein. For the various modules and functions described herein, one or more computing devices 100 or components of computing device 100 may be used. Devices that include components similar or different to those included in computing device 100 may be used, and may be connected to a network and used as a system. One or more processor(s) 105 may be configured to carry out embodiments of the present invention by, for example, executing software or code. Storage 130 may be or may include, for example, a hard disk drive, a floppy disk drive, a Compact Disk (CD) drive, a CD-Recordable (CD-R) drive, a universal serial bus (USB) device or other suitable removable and/or fixed storage unit. Data may be stored in a storage 130 and may be loaded from storage 130 into a memory 120 where it may be processed by controller 105. In some embodiments, some of the components shown in FIG. 1 may be omitted.

Input devices 135 may be or may include a mouse, a keyboard, a touch screen or pad or any suitable input device. It will be recognized that any suitable number of input devices may be operatively connected to computing device 100 as shown by block 135. Output devices 140 may include one or more displays, speakers and/or any other suitable output devices. It will be recognized that any suitable number of output devices may be operatively connected to computing device 100 as shown by block 140. Any applicable input/output (I/O) devices may be connected to computing device 100, for example, a wired or wireless network interface card (NIC), a modem, printer or facsimile machine, a universal serial bus (USB) device or external hard drive may be included in input devices 135 and/or output devices 140.

Embodiments of the invention may include one or more article(s) (e.g. memory 120 or storage 130) such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein.

FIG. 2 is a schematic drawing of a system 200, according to some embodiments of the invention. System 200 may include a computing device 202 including a processor 203 and storage 204. Computing device 202 may be connected to a computing device 210 of a human operator that includes processor 211. Computing device 202 may be connected to a surveillance device 220 including processor 221. A human operator may be a user, e.g. a video analyst or a human employed in the surveillance industry or a member of the police force who is tasked with the surveillance of a person or a physical object.

Computing devices 100, 202, 210 and 220 may be servers, personal computers, desktop computers, mobile computers, laptop computers, and notebook computers or any other suitable device such as a cellular telephone, personal digital assistant (PDA), video game console, etc., and may include wired or wireless connections or modems. Computing devices 100, 202, 210, and 220 may include one or more input devices, for receiving input from a user (e.g., via a pointing device, click-wheel or mouse, keys, touch screen, recorder/microphone, or other input components). Computers 100, 202, 210 and 220 may include one or more output devices (e.g., a monitor, screen, or speaker) for displaying or conveying data to a user.

Any computing devices of FIGs. 1 and 2 (e.g., 100, 202, 210 and 220), or their constituent parts, may be configured to carry out any of the methods of the present invention. Any computing devices of Figs. 1 and 2, or their constituent parts, may include an electronic display a user interface, or another engine or module, which may be configured to perform some or all of the methods of the present invention. Systems and methods of the present invention may be incorporated into or form part of a larger platform or a system/ecosystem, such as agent management platforms. The platform, system, or ecosystem may be executed using the computing devices of FIGs. 1 and 2, or their constituent parts.

A processor such as processor 203 of computing device 202 processor 211 of device 210, and/or processor 221 of computing device 220 may be configured to submit and/or receive video assemblies, e.g. a first or second video assembly including a sequence of video frames and a plurality of data items.

A video assembly may be a digital file that stores moving visual images frames, often accompanied by audio. It typically contains data items, for example compressed video data, audio tracks, and metadata (such as subtitles or file information).

A video assembly may be generated by a camera, e.g. a surveillance camera connected to surveillance device 220 shown in FIG. 2. A video assembly may include several video segments, e.g. three video segments. Each video segment may be recorded by one camera. Thus, in some embodiments, a video assembly may include video segments which have been recorded from a plurality of cameras. In some embodiments, a video assembly includes a plurality of videos which have been captured from a single camera device or a plurality of camera devices. Video cameras may have a specific location, e.g. a location that can be expressed as coordinates within a geographic coordination system (e.g. GPS coordinates). For example, in some embodiments, one or more second video assemblies are assembled using data from a plurality of camera devices or from a video analytics module. A video analytics module may retrieve video assemblies from cameras or recorded footage and can preprocess, e.g. extract frames and reduce noise. The module may use AI models to detect and classify objects and actions and output processed video assemblies which include a sequence of frames and data items.

A video assembly may be a continuous video, or a video that includes a combination of one or more video clips. When a video includes one or more video clips, the method may include a step of dividing the continuous video into video clips and applying the method on the individual video clips.

Data items of a plurality of data items within a video assembly, e.g. a first video assembly, may include one or more of: physical camera data items, operational data items, video metadata items, and embeddings. Video assemblies, e.g. several video clips, may be assembled and stored in a database, e.g. a video assemblies database 404 shown in FIG. 4.

Physical camera data items may include, for example, camera make and model lens type and focal length, aperture, shutter speed, ISO or gain, white balance, GPS coordinates (camera location), orientation or tilt of the camera. Physical camera data items may be dynamic. For example, orientation or tilt of the camera may change within frames of a video assembly.

Operational data items may include, for example, video assembly name or scene identifier, date and time of recording, operator or camera identifier.

Video metadata items may include, for example, frame rate and resolution, bit rate and codec information, duration and timecode, subtitles or captions, content tags or keywords. Video metadata items may be generated for each of the one or more second video assemblies indicating the camera from which the respective second video assembly is obtained.

Data items may include objects such as a house, an entrance door, or a window. Data items, e.g. semantic descriptions in text form, may be generated by subjecting video assemblies to an encoder which is associated with a vision language model (VLM), e.g. encoder 410 shown in FIG. 4, which processes and converts visual and textual inputs, e.g. semantic descriptions in text form identified in video assemblies, into shared numerical representations, known as embeddings. A VLM may be an artificial intelligence system which is built by associating an LLM with a vision encoder, giving the LLM the ability to "see", e.g. to interpret, textualize and define objects within frames, e.g. images and video frames. With this ability, VLMs can process and provide advanced understanding of video, image, and text inputs supplied in the prompt to generate text responses. Input processing may proceed via a visual encoder which processes images or video frames to extract visual features such as shapes, colors, and semantic descriptions in text form.

An encoder, e.g. a vision language model encoder such as encoder 410 shown in FIG. 4, may map both visual and textual features into a common semantic space, where related images and text are positioned close together. For example, an image of a "dog" and the word "dog" would have similar embeddings. The result is a set of multimodal embeddings that capture the relationships between vision and language. Embeddings and frames of video assemblies may be stored in a frames and embedding database 414 shown in FIG. 4. The generated embeddings can be used for tasks such as: image or video captioning, visual question answering, image-text retrieval or recognition of semantic descriptions in form of textual context.

Embeddings may include or may be numerical representations of data items, e.g. of words, images, audio or video. For example, an embedding converts one or more data items into a vector that preserves relationships and similarities between the data items. In natural language processing, words or sentences can be represented as vectors so that words with similar meanings (like "car" and "automobile") have similar numerical representations. Embeddings may also capture visual features (like shapes, colors, or motion patterns) so that similar images or scenes have similar embeddings.

Metadata items, also referred to as metadata herein, can describe objects and may include one or more of: object class, object size, object attributes, color features, and motion features. For example, metadata items and embeddings may be supplemented by contextual information represented in knowledge graphs. A knowledge graph may include data represented as relationships between one or more first data items and the one or more second data items. Relationships of knowledge graphs may have been derived outside single-task analytics that can be used in the production of metadata items. A knowledge graph may include data items that disclose relationships between one or more first data items and the one or more second data items in form of semantic descriptions in text form. Knowledge graphs may be generated from metadata items and embeddings. For example, knowledge graphs may be generated from video metadata items and embeddings in the assessment of the similarity between the one or more first data items and the one or more second data items. Knowledge graphs may include data items that disclose relationships between one or more video assemblies based on external characteristics such as relationships between objects and devices in the real world, including physical proximity or relationship to physical features such as a traffic intersections.

In the assessment of a similarity between one or more first video assemblies and the one or more second video assemblies, knowledge graphs contextualizing the one or more first video assemblies may be compared to knowledge graphs contextualizing the one or more second video assemblies.

In some embodiments, the assessment of similarity between one or more first data items and one or more second data items may proceed using video metadata items and embeddings. In some embodiments, such a comparison does not require the comparison of knowledge graphs. However, in some embodiments, knowledge graphs include metadata items and embeddings. Knowledge graphs created for a first video assembly and knowledge graphs created for one or more second video assemblies may be compared in the assessment of similarity between the first video assembly and one or more second video assemblies, wherein knowledge graphs contextualizing the first video assembly may be compared with knowledge graphs contextualizing the second video assembly.

A processor such as processor 203 of computing device 202 processor 211 of device 210, and/or processor 221 of computing device 220 may be configured to present the first video assembly to a human operator over an electronic display.

A processor such as processor 203 of computing device 202 processor 211 of device 210, and/or processor 221 of computing device 220 may be configured to receive from a human operator, over a user interface associated with the electronic display, a selection of one or more first data items from the plurality of data items within the first video assembly. The user interface may be executed by processor 203 of computing device 202 or processor 211 of user device 210. For example, a human operator may select one or more data items from a video assembly that share a specific feature, for example an open vehicle door or window.

In some embodiments, the selection process of the one or more first data items from the plurality of data items within the first video assembly may be carried out by a machine learning module. For example, a machine learning module, implemented by computer processor such as processor 203 or 211, may be configured to select one or more first data items, for a previously specified rule, for example, when one or more first data items belong to a specific subclass. For example, a machine learning module may select data items within a video assembly which show an open vehicle door or window. A machine learning module, implemented by a computer processor such as processor 203 or processor 211, may be configured to train an ML model to distinguish between visual objects belonging to the at least one subclass and visual objects belonging to the one or more predefined classes but not belonging to the at least one subclass. This distinction may be based on the human operator previously selecting some of the visual objects as belonging to at least one subclass, or on the human operator not selecting some of the visual objects as belonging to at least one subclass.

A processor such as processor 203 of computing device 202 processor 211 of device 210, and/or processor 221 of computing device 220 may be arranged to identify one or more second video assemblies which include a sequence of frames and one or more second data items, wherein the one or more second data items are similar to the selection of the one or more first data items.

Embeddings and certain data items, e.g. operational data items, can be automatically compared in direct and predetermined ways to identify similarities between a first set of data items and a second set of data items, e.g. via numeric comparison such as comparison via time-ranges, geometric proximity, relatedness in a topology, class subsumption hierarchies, etc..

Similarities in latent semantics can be computed in higher-dimensional spaces that are automatically learned. Latent semantics may refer to hidden or underlying relationships between words, phrases or concepts, linguistic or visual, that are not immediately obvious from their surface meaning or direct word matches. For example, words like "lawyer", "attorney", and "counsel" are semantically related, even if they do not appear together directly. Within that latent semantic space, a clustering approach may be adopted. For example, in a clustering approach, semantic space refers to the process of grouping similar items based on their meanings, as represented by their embeddings (numerical vectors in a multidimensional space). Each data item (e.g., a word, sentence, image, or document) may be converted into an embedding, e.g. in form of a vector that captures its meaning. These vectors are plotted in a high-dimensional "semantic space," where similar meanings are located close together. A clustering algorithm (such as k-means, DBSCAN, or hierarchical clustering) is applied to group these vectors based on their proximity. Items with similar meanings form clusters, while dissimilar ones are placed in different clusters. Each cluster may represent a semantic category or theme. For example, in a semantic space of words, one cluster might contain "judge", "lawyer", "court" and "trial" all related to the legal domain. A clustering approach in semantic space can help to identify and organize conceptually related items by analyzing their semantic similarity, not just their surface-level features.

In some embodiments, data items are represented in the form of a knowledge graph, and embeddings may be added to the knowledge graph. For example, a representation of data items in the form of a knowledge graph means organizing data items as a network of interconnected entities and relationships, rather than as isolated data fields or tables. Nodes may be entities within a knowledge graph that can represent an object or concept - for example, a video assembly, camera, location, person, or event. Knowledge graphs may include data items that disclose relationships between one or more video assemblies based on external characteristics such as relationships between objects and devices in the real world, including physical proximity or relationship to physical features such as a traffic intersections.

Edges, the connections between the nodes, may represent relationships. For example, video A was recorded by Camera X; Camera X was operated by Person Y; Video A depicts Location Z. Both nodes and edges can have attributes describing them, such as: For a video node: duration, resolution, creation date. For a person node: role, name, organization. Because the graph structure explicitly encodes relationships, it may enable semantic reasoning. Systems can infer new relationships or answer complex queries, e.g. the generation of labels for similarities between metadata items for different videos.

Advantageously, the representation of data items as a knowledge graph or the supplementation of embeddings with contextual information represented in knowledge graphs may improve the identification of similarities between a first set of data items of a first video assembly and a second set of data items of a second video assembly by transforming raw descriptive data into a structured, interconnected web of meaning, enabling richer search and analysis of similarity.

For example, one or more first data items and one or more second data items of a second video assembly may be assessed in their semantic similarity or the proximity in physical space and time of their capture. Semantic similarity may refer to the degree to which two pieces of information - such as words, sentences, or documents - share the same meaning or convey similar ideas, even if they use different wording. It can go beyond surface-level similarity (like matching exact words) and focuses on meaning-based relationships. For example: The phrases "front door" and "main door" are semantically similar because they describe the same concept, even though the words differ. In contrast, "front door" and "door lock" are related but not semantically similar - they are connected by context, not meaning.

A processor, such as processor 203 of computing device 202 processor 211 of device 210, and/or processor 221 of computing device 220, may be configured to generate one mor more candidate video assemblies including a sequence of frames, wherein the sequence of frames includes a subset of the frames, and data items from the one or more second video assemblies which have been identified as being similar to the one or more first data items, and a natural language label describing the sequence of frames. A natural language label describing the sequence of frames may be generated by a VLM.

Embeddings, which can be used in assessing similarity between a selection of the one or more first data items and the one or more second data items for one or more frames may be generated from natural language labels and/or from structured data, e.g. metadata items. A similarity score may be based on the relationship between embeddings from the data items of the first and second video assemblies. Embeddings, and thereby similarity scores, may also be generated by submitting images or sequences of video frames, either as entire frames with identified data items or extracts according to those identified data items, to an encoder associated with a vision language model. A VLM may also generate a descriptive text from images or sequences of video frames, either as entire frames with identified data items or extracts according to those identified data items, to an encoder associated with a vision language model.

A processor, such as processor 203 of computing device 202 processor 211 of device 210, and/or processor 221 of computing device 220, may be configured to present a human operator, over an electronic display, with the one or more candidate video assemblies. For example, a candidate video assembly that includes a sequence of frames, data items and a label that discloses the relationship within the frames is shown to a human operator. In some embodiments, a candidate video assembly includes a sequence of contiguous frames, e.g. a sequence of 3, 10, 100 or more frames that follow one another in sequence, without any missing or skipped frames - for example, frame 1, frame 2, frame 3, and so on. Thus, contiguous frames may be connected and form an uninterrupted sequence of frames.

A processor, such as processor 203 of computing device 202 processor 211 of device 210, and/or processor 221 of computing device 220, may be configured to receive feedback from a human operator, over the user interface, whether or not a label generated for the one or more candidate video assemblies is acceptable. For example, a human operator is given a choice and may accept a candidate video assembly, e.g. when the label is identified to correctly describe the sequence of frames of the candidate video assembly. For example, a human operator is given a choice and may reject a candidate video assembly, e.g. when the label is identified to incorrectly describe the sequence of frames of the candidate video assembly. For example, a human operator is given a choice and may accept a candidate video assembly, e.g. when the label is identified to correctly describe the sequence of frames of the candidate video assembly when manually updated by the human operator.

FIG. 3 shows a flowchart for an example method 300 of video selection and video labelling. Video selection may include selecting frames of a video assembly by a human operator.

In operation 302, a computer memory receives a first video assembly including a sequence of frames and a plurality of data items. A video assembly may be a video recorded by a surveillance camera, for example a video camera which monitors entrances to a house, e.g. doors but also windows or garage entries or gates. For example, a video camera may periodically provide a computer memory with recordings of the video camera. Video recordings may have a length of a second, a minute, an hour, a day. A video camera may be connected to surveillance device 220 or computing device 202 shown in FIG. 2.

In operation 304, a human operator is presented a first video assembly over an electronic display. For example, a human operator can view or review a video assembly on a display such as a computer display, a smartphone, a tablet or a laptop, or any other device that has a display. For example, a human operator may access video assembly data base 404 or data items database 406 stored in storage 204 of computing device 202. A human operator can analyze a sequence of frames of the video and may be able to identify certain data items, e.g. objects such as a door, a gate or a car in the displayed video assembly.

In operation 306, a computer memory, e.g. storage 204, may receive, from the human operator, over a user interface associated with the electronic display, a selection of one or more first data items from the plurality of data items within the first video assembly. A user interface may be, for example, a touch screen or free text input functionalities. A human operator may make a selection of one or more data items by selecting pre-identified data items, e.g. objects, from the video assembly. In some embodiments, a human operator may select one or more data items which have received attention from a human operator, e.g. data items that pose a security risk such as a door open for a prolonged period of time, or a person entering a property. Selected data items from a video assembly may be selected from, or may be included in, file index 416 shown in FIG. 4.

In operation 308, a computer processor, e.g. processor 203, may identify one or more second video assemblies including a sequence of frames and one or more second data items, wherein the one or more second data items are similar to the selection of the one or more first data items. The identification of similarity may be conducted by carrying out a similarity search 420 shown in FIG. 4 based on the selected data items. In the one or more second video assemblies, the sequence of frames and the one or more second data items may be associated with each other. When a sequence of frames and one or more data items are associated with each other, the frames can be linked to other data items (e.g., audio samples, sensor readings, subtitles, or analytical tags), e.g. through metadata such as:
- Timecodes: Each frame can have a timestamp that aligns it with corresponding data items (like audio or telemetry).
- Identifiers: Unique frame IDs or hashes can be used to reference external data (e.g., annotations or object detection results).
- Container formats: In formats like MP4 or MKV, frames may be stored in "chunks" or "samples" that include both the frame data and pointers to related data streams.

For example, the identification of a similarity of frames within a sequence of frames of a first video assembly and a second video assembly may proceed by the assessment of similarity between data items, such as embeddings or graph similarity measures within a knowledge graph. For example, an inductive selection by a human operator of one or more first data items from the plurality of data items within the first video assembly (the selection may also be described herein as the selection of a subset of 'golden' video segments), may be used to identify one or more frames within a sequence of frames of a second video assembly by comparing various data items that belong to the first and/or second video assembly.

In one example, the similarity between the frames of a first and a second video assembly may be assessed by an identification of latent semantic similarity via the embeddings, or their representation as text labels, data derived from the knowledge graph, such as proximity in physical space and time of the capture of the video assemblies, or according to structured data items such as video metadata items produced by single-task computer vision models, such as object detection and tracking models, which may or may not be represented in the knowledge graph.

Some data items can be directly compared for a first video assembly and a second video assembly, based either on structured metadata or data represented in the knowledge graph. For example time-ranges, geometric proximity, relatedness in a topology, class subsumption hierarchies, etc. can be compared by, e.g. comparing the recording time of a first video assembly and a second video assembly, or other numerical comparisons between the video assemblies.

Similarity for latent semantics can be computed in higher-dimensional spaces that are automatically learned. For example, within that latent semantic space, a clustering approach may be used.

In operation 310, a computer processor may generate one or more candidate video assemblies each including: a sequence of frames, wherein the sequence of frames includes a subset of the frames, and data items from the one or more second video assemblies which have been identified to be similar to the one or more first data items, and a natural language label describing the sequence of frames. A candidate video assembly may be an option for a video assembly which has been assigned a natural label describing the sequence of frames which is subject to review by a human operator, e.g. to check whether the generated natural language labels correctly describes such a sequence of frames. In some embodiments, a candidate video assembly includes a sequence of contiguous frames, e.g. a sequence of 3, 10, 100 or more frames that follow one another in sequence, without any missing or skipped frames - for example, frame 1, frame 2, frame 3, and so on. Thus, contiguous frames may be connected and form an uninterrupted sequence of frames. A natural label may describe the contingency in the sequence of frames.

Labels that define the similarity of data items might be obtained from a predefined list of labels, e.g. generated labels from an existing VLM. For example, a first video assembly shows an image of "white sliding door", and a second video assembly shows an image of a "grey sliding door", and the processor matches the similarity to the previously generated term "sliding door".

Advantageously, labels may also be generated without consulting a predefined list of labels, e.g. by submitting similar data items for a first video assembly and a second video assembly to a machine learning model that provides a new categorization for the relationship in similarity by interpreting embeddings in combination with data items. For example, for a first video assembly, embeddings and data items define a door movement of a white sliding door in direction +X and, for a second video assembly, embeddings and data items define a door movement of a red door in direction -X. The type of door in the second video assembly is undefined. By combining the data items for the appearance of the doors with the data items that suggest a movement of the doors in opposite but in form of linear directions, a machine learning model may interpret, with respect to the sliding direction, that the door shown in the second video assembly is a sliding door, and may define the label "sliding door" as the relationship in similarity between the selection of the data items for the first video assembly and the data items for the second video assembly without having identified the term " sliding" from the appearance of the door in the second video assembly.

In operation 312, a computer processor may present a human operator, over an electronic display, with the one or more candidate video assemblies.

In operation 314, a computer processor may receive feedback, over the user interface, whether the label generated for the one or more candidate video assemblies is acceptable.

FIG. 4 illustrates an embodiment of the invention in form of an automated workflow in the video selection and labelling.

For example, in this workflow, input is received from a human operator, e.g. in the selection of data items (also referred to as "golden segments" such as selected data items and/or embeddings). Input, e.g. data items such as metadata items, and video assemblies, e.g. frames of a video assembly, can be automatically retrieved from storage, e.g. by querying a data source such as data source 402.

A data source 402, e.g. a database of video assemblies may provide video assemblies 404, e.g. raw video assemblies and data items 406, e.g. camera type, daytime, resolution and frame rate for video assemblies 408.

Video assemblies 404 may be processed by VLM 410. VLM 410 may be associated with an encoder via which embeddings can be derived, e.g. clip embeddings 412, for the video assemblies. Frames of video assemblies, e.g. raw video assemblies, may be stored in a frames database 415. Embeddings may be stored in embeddings database 414. In some non-limiting instances, a vector database can be used as an embeddings database. Relationships between data items (stored in data items database 406) and embeddings (stored in embeddings database 414) of a video assembly may be stored in knowledge database 417. Data item database 406 may be provided or can be accessed via a file index 416 or 422. File index 422 may be a selection of data items. For example, file index 422 may be a selection of one or more first data items from a plurality of data items within a first video assembly which is received from a human operator, over a user interface associated with an electronic display.

File index 416 may include a selection of data items 418, also referred to as "golden segments" which are associated with a specific video assembly or embedding derived from a video assembly. Embeddings stored in embeddings database 414 may be searched or compared for specific embeddings in similarity search 420. Frames of frames database 415 may be searched or compared for specific frames of a video assembly in similarity search 420. Knowledge graphs of knowledge graph database 417 may be searched or compared for specific knowledge graphs of a video assembly in similarity search 420. Search results, e.g. in form of identified similarities may be stored in file index 422. File index 422 may include relevant data 424. Relevant data may include natural language labels such as textual labels generated in operation 310 by a computer processor. In some embodiments, identified similarities may be back fed into file index 416. Identified similarities may include similarities in the selection of one or more first data items and one or more second data items. For example, when a sequence of video frames has been selected as useful by a human operator in the assessment of similarities between a first data item and a second data item, the sequence of video frames may be fed back to file index 416 to extend the search for further second data items that show such a similarity with a first data item.

In some embodiments, instead of passing once through the flow from left to right (culminating in a file index 422 that is a subset of the selected raw video and metadata) an inductive approach may involve the selection of further original video assemblies 404. In the most general case, rather than relying on a fixed set of video in the data source, the system might propose further video is produced or retrieved from beyond the system. For example, this can involve sensors that are encoded in the camera metadata (e.g. alternative cameras that are recorded in relationship to those from which video assemblies are retrieved). For example, further cameras or sensors may be connected to surveillance device 220 shown in FIG. 2. Furthermore, this may involve human labour to secure such video and loading it into the system, according to the suggestions made. It might also involve the procurement of new metadata-producing video analytics that were not part of the original system. For example, video analytics applications may provide further data items than originally included in the assemblies.

In some embodiments, an agentic AI approach may be used to select one or more first data items from the plurality of data items within the first video assembly. An orchestrating agent may facilitate a coordination without a predefined logic, e.g. the coordination is generated by an LMM (e.g. an LLM). An orchestrating agent may prompt other generative agents to retrieve video assemblies and identify frames and data items, e.g. via embeddings, structured data and knowledge graph contents, e.g. via RAG (retrieval-augmented generation), including graphRAG which can query knowledge graphs in order to generate the orchestration. Data items may further be processed to derive further metadata items via video analytics. For example, metadata items that were not associated with the video when ingested.

For example, human intention of a human operator can be solicited via multi-modal, conversational interactions. The human operator may invoke the labelling agent, e.g. executed by computing device 202 or 210, which can be prompted with both existing labels, video data itself, as well as video and camera metadata, and which may refine these labels by removing erroneous components to the label or adding further components. Finally, the human operator may use the human interaction, including de-selection and labelling, to amend the selection inductively.

The aforementioned flowcharts and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved, It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

As will be appreciated by one skilled in the art, aspects of the present invention may be embodied as a system or an apparatus. Accordingly, aspects of the present invention may take the form of an entirely hardware embodiment or an embodiment combining software and hardware aspects that may all generally be referred to herein as a "circuit," "module" or "system."

The aforementioned figures illustrate the architecture, functionality, and operation of possible implementations of systems and apparatus according to various embodiments of the present invention. Where referred to in the above description, an embodiment is an example or implementation of the invention. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with materials equivalent or similar to those described herein.

While the invention has been described with respect to a limited number of embodiments, these should not be construed as limitations on the scope of the invention, but rather as exemplifications of some of the preferred embodiments. Other or equivalent variations, modifications, and applications are also within the scope of the invention. Accordingly, the scope of the invention should not be limited by what has thus far been described, but by the appended claims and their legal equivalents.

## Claims

1. A method of video selection and labelling comprising:
receiving, at a computer memory, a first video assembly comprising a sequence of video frames and a plurality of data items;
presenting a human operator, over an electronic display, the first video assembly;
receiving from the human operator, over a user interface associated with the electronic display, a selection of one or more first data items from the plurality of data items within the first video assembly;
identifying, by the computer processor, one or more second video assemblies comprising a sequence of frames and one or more second data items, wherein the one or more second data items are similar to the selection of the one or more first data items;
generating one or more candidate video assemblies each comprising: a sequence of frames, wherein the sequence of frames comprises a subset of the frames, and data items from the one or more second video assemblies which have been identified to be similar to the one or more first data items, and a natural language label describing the sequence of frames;
presenting the human operator, over the electronic display, the one or more candidate video assemblies; and
receiving feedback from the human operator, over the user interface, whether the label generated for the one or more candidate video assemblies is acceptable.

2. The method of claim 1, wherein the one or more first data items are selected from one or more of: physical camera data items, operational data items, video metadata items, and embeddings.

3. The method of claim 2, wherein the embeddings are image or video embeddings.

4. The method of claim 2, wherein the video metadata items and embeddings are used in the assessment of the similarity between the one or more first data items and the one or more second data items.

5. The method of claim 4, wherein knowledge graphs comprise the metadata items and embeddings, and the knowledge graphs are compared in the assessment of the similarity between the first video assembly and one or more second video assemblies, wherein the knowledge graphs contextualizing the first video assembly are compared with the knowledge graphs contextualizing the second video assembly.

6. The method of claim 2, wherein the video metadata items describe objects that appear in the frames and comprise one or more of: object class, object size, object attributes, color features, and motion features.

7. The method of claim 1, further comprising retrieving the one or more second video assemblies from a plurality of camera devices.

8. The method of claim 1, further comprising retrieving the one or more second video assemblies from a video analytics module.

9. The method of any of claims 7-8, wherein video metadata items are generated for each of the one or more second video assemblies indicating the camera from which the respective second video assembly is obtained.

10. The method of any of claims 1-9, wherein the natural language label describing the sequence of frames is generated by a vision-language model.

11. A system for video selection and labelling comprising:
a computer memory arranged to receive a first video assembly comprising a sequence of video frames and a plurality of data items;
an electronic display configured to (a) present to a human operator, the first video assembly; and (b) present to the human operator the one or more candidate video assemblies;
a user interface, associated with the electronic display, arranged to (a) receive from the human operator a selection of one or more first data items from the plurality of data items within the first video assembly; and (b) receive feedback from the human operator, over the user interface, whether the label generated for the one or more candidate video assemblies is acceptable; and
a computer processor arranged to identify one or more second video assemblies comprising a sequence of frames and one or more data items, wherein the one or more second data items are similar to the selection of the one or more first data items, wherein the computer processor is arranged to generate one or more candidate video assemblies each comprising: a sequence of frames, wherein the sequence of frames comprises a subset of the frames and data items from the one or more second video assemblies which have been identified to be similar to the one or more first data items, and a natural language label describing the sequence of frames.

12. The system of claim 11, wherein the one or more first data items are selected from one or more of: physical camera data items, operational data items, video metadata items embeddings.

13. The system of claim 12, wherein the embeddings are image or video embeddings.

14. The system of claim 12, wherein the video metadata items and embeddings are used in the assessment of the similarity between the one or more first data items and the one or more second data items.

15. A non-transitory computer readable medium for video selection and labelling comprising a set of instructions that, when executed, cause at least one computer processor to:
receive a first video assembly comprising a sequence of frames and a plurality of data items;
present a human operator, over an electronic display, the first video assembly;
receive from the human operator, over a user interface associated with the electronic display, a selection of one or more first data items from the plurality of data items within the first video assembly;
identify one or more second video assemblies comprising a sequence of frames and one or more second data items, wherein the one or more second data items are similar to the selection of the one or more first data items;
generate one or more candidate video assemblies each comprising: a sequence of frames, wherein the sequence of frames comprises a subset of the frames and data items from the one or more second video assemblies which have been identified to be similar to the one or more first data items, and a natural language label describing the sequence of frames;
present the human operator, over the electronic display, the one or more candidate video assemblies; and
receive feedback from the human operator, whether the label generated for the one or more candidate video assemblies is acceptable.
